# EUROPEAN PATENT SPECIFICATION

(11) **EP 3 430 950 B1**
(45) Date of publication and mention of the grant of the patent: **10.06.2020**
(21) Application number: 18182006.9
(22) Date of filing: 05.07.2018
(51) Int. Cl.: A47J 31/06, A47J 31/46, A47J 31/56

(54) **ESPRESSO COFFEE MACHINE AND RELATIVE DEVICE FOR CONTROLLING THE EMULSION OF THE COFFEE-BASED BEVERAGE**
ESPRESSOKAFFEEMASCHINE UND ZUGEHÖRIGE VORRICHTUNG ZUR STEUERUNG DER EMULSION DES KAFFEEBASIERTEN GETRÄNKS
MACHINE À CAFÉ ESPRESSO ET DISPOSITIF ASSOCIÉ POUR COMMANDER L'ÉMULSION DE LA BOISSON À BASE DE CAFÉ

(30) Priority: 18.07.2017 IT 201700081436
(43) Date of publication of application: 23.01.2019
(73) Proprietor: Cappellini, Davide, 26029 SONCINO (CR) (IT)
(72) Inventor: Cappellini, Davide, 26029 SONCINO (CR) (IT)
(74) Representative: Branca, Emanuela

(56) References cited:
- EP-A1- 0 465 877
- EP-A1- 1 882 433
- EP-A1- 2 314 182
- WO-A1-2014/032110
- WO-A1-2015/056241
- FR-A1- 2 483 762

## Description

The present invention relates in general to an espresso coffee machine and, in particular, to a device for controlling the emulsion of the coffee-based beverage obtained with such an espresso coffee machine.

Espresso coffee is a beverage obtained starting from coffee powder. The coffee powder for preparing espresso coffee is obtained through grinding roasted coffee beans. The process for preparing an espresso coffee typically takes place through three different steps. A first step, so-called flooding or pre-brewing, envisages filling with water the interstitial cavities of the layer of coffee powder, so as to prevent a subsequent jet of pressurized water from indenting the surface of the layer. A second step, so-called extraction step, envisages the passage of water at optimal pressure and temperature through the layer of coffee powder. The extraction process is very complex and involves different chemical and physical phenomena. Finally, the dispensing ends with the emulsion process of the oils extracted in the previous step, through which the beverage assumes the creamy appearance that distinguishes it.

In order to perform the espresso coffee production process, specific apparatuses are used called espresso coffee machines. One of the first models of espresso coffee machine is disclosed in US 726793, filed in 1902, which describes an apparatus that allows the water coming from a boiler under pressure to be forced through the ground coffee powder, which is located in a specific perforated container. The improvements developed over time have constantly led towards the temperature and pressure generated by these apparatuses reaching the ideal conditions to obtain a maximum quality beverage. In fact, the espresso coffee produced with current apparatuses differs considerably from that obtained with the apparatus disclosed in US 726793.

In order to force the passage of hot water through the coffee powder, apparatuses of the type described in US 726793 use the thrust of the pressure generated by a saturated steam boiler. This pressure has a value comprised between about 1 bar and about 1.5 bar. In these apparatuses the pressure is connected with the temperature of the boiler from the Mollier diagram. Since to obtain a good quality beverage the water for its production must not exceed 100°C, the coffee obtained with these apparatuses tends to have a "burned" flavor. The extraction pressure of the coffee is therefore a compromise between the need to optimize the thrust for forcing the water through the coffee powder and the need not to reach certain temperature values, which would make the beverage unacceptably "burned".

Attempts to improve the coffee extraction process have over time led to the development of increasingly efficient devices for generating the water pressure. Some pressure generation devices are disclosed, for example, in CH 262232 and US 2878747. US 3119322 instead describes an espresso coffee machine with which it is possible to considerably increase the pressure with which the water is forced to pass through the coffee powder, independently from the temperature. In detail, CH 262232 describes an espresso coffee machine of the so-called lever type, where the pressure is given to the water by a piston maneuvered through a lever and pushed by a spring. US 2878747 describes an espresso coffee machine of the hydraulic type, where the pressure is given to the water by a piston activated through a hydraulic actuator. US 3119322 finally describes an espresso coffee machine where the pressure is generated by a rotary pump. EP2314182 A1 also describes a coffee machine. With respect to espresso coffee machines of the previous generation, the characteristics of the beverage have been completely reviewed.

The most evident feature of this new beverage obtained under the thrust of mechanical members is the formation, on the surface of the beverage itself, of a persistent layer of blond/hazelnut foam. The hot water, but no longer overheated, along its path along the countless labyrinths that pass through the ground coffee, melts and emulsifies the fats and colloids contained in the coffee, imprisons in this emulsion the air and the aromatic substances it encounters in its path until it comes out of the filter, forming tiny bubbles. When the beverage falls back into the cup, these bubbles rise to the surface of the beverage and are grouped in a layer so dense and persistent that, although technically speaking of a foam, from the beginning it is called "cream" because of its similarity to creams obtained in confectionery.

It is intuitive to understand how the contribution of the air imprisoned in the process of creating the emulsion is fundamental. At the same time it is also essential, in order to obtain a quality beverage, to flood the ground coffee powder for a few seconds with water at low pressure before applying the maximum thrust of the pump to finalize the dispensing of the beverage.

In lever and in hydraulic machines, this flooding step takes place automatically during the raising stroke of the piston, i.e. when the water coming from the heater, at a pressure of less than 1.5 bar, floods the compression chamber under the bottom of which the filter for the coffee powder is located. To ensure that the dispensing cycle is started with a flooding step at low pressure it was therefore necessary to resort to measures and devices of the type described in US 3230974, which illustrates a device known as a brewing valve.

Starting from the brewing valve described in US 3230974 and up to the present day, each new espresso coffee machine has had to somehow come to terms with the need to carry out this initial step, which consists in wetting the coffee powder without applying a significant thrust pressure. It is evident that this first step of the dispensing, which involves the low pressure pre-brewing process with the incorporation of air, is essential for obtaining a quality beverage.

In fact, processes are known for forcing the injection of air in this step of low pressure pre-brewing. An example is described in EP 0250810, which illustrates a method for the production of beverages in which, after a wetting step at low pressure comprised between 1.96 and 2.97 bar, air is forced with a pressure comprised between 2.97 and 5.94 bar.

A second example is described in GB 2386543, relating to a tea extraction process. In this case, an optional pre-brewing process using steam is described.

Although these processes are known, actually they have never really been applied in the market of professional espresso coffee machines due to different production limits. One of these limits is determined by the type of pressurized air or steam generator, which generally consists of a pressurized storage tank communicating with an on-off valve which causes the opening of the flow towards the brewing chamber. This system is not very flexible and can be configured to work with a single air flow value, which is necessarily a compromise between all the possible ways of extracting the various beverages.

A second problem is closely related to the temperature of the air or gas that is to be forced into the chamber during the pre-brewing step. In fact, it is known that the air increases in volume when heated. In the pre-brewing step, the air, mixed with hot water, heats and expands, tending to form larger bubbles inside the colloidal matrix. These bubbles disturb the correct formation of the emulsion.

At the same time, the air that impinges the pre-brewing water, typically at a temperature between about 90°C and 95°C, tends to cool down, thus not allowing the correct chemical pre-brewing process. The outcome would be different if the air introduced was already at a temperature close to that of the brewing water.

The aim of the present invention is therefore that of providing a device for controlling the emulsion of the coffee-based beverage obtained with an espresso coffee machine that is capable of solving the drawbacks of the prior art mentioned above in an extremely simple, cost-effective and particularly functional way.

In detail, it is an object of the present invention to provide an espresso coffee machine that is capable of carrying out the pre-brewing process simply, efficiently and flexibly with the introduction of suitably treated pressurized air. In particular, the flow of pressurized air which is introduced into the brewing chamber during the pre-brewing process is generated by a compressor driven by a variable speed motor, so that the air flow can be varied through an electronic control. This entails the possibility of adapting the amount of air flow in relation to the different types of beverages, the different amounts of coffee present in the brewing chamber (single or double coffee) and to the different amounts of water used for the pre-brewing step.

Another object of the present invention is to provide an espresso coffee machine capable of injecting, inside the extraction chamber, heated air at a temperature close to that of the pre-brewing water. This has the advantage of not changing the pre-brewing water temperature, keeping the air volume expansion under control.

A further object of the present invention is to provide an espresso coffee machine that is capable of varying the air flow rate through the electronic control of the compressor motor speed, so as to vary the temperature of the air introduced into the chamber in order to achieve different levels of emulsion.

These and other aims according to the present invention are achieved by providing an espresso coffee machine as described in claim 1. The present invention also relates to a process for pre-brewing and extracting coffee as described in claim 11.

Further characteristics of the invention are highlighted in the dependent claims, which are an integral part of the present description.

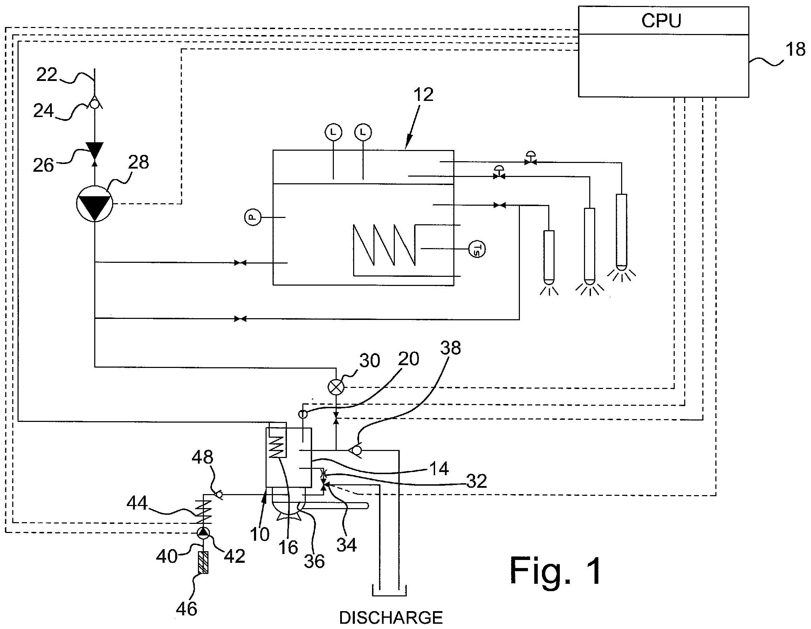

The characteristics and advantages of an espresso coffee machine according to the present invention shall become clearer from the following exemplifying and nonlimiting description, with reference to the appended schematic drawings, in which the only figure schematically shows the hydraulic and electronic circuits of such espresso coffee machine.

With reference to the figure, the hydraulic and electronic circuits, as well as the main components, of the espresso coffee machine according to the present invention, are shown. The espresso coffee machine comprises at least one dispensing group 10, provided for producing the coffee and physically and functionally independent from a main boiler 12, provided for producing hot water and steam.

The temperature control of the water for producing the coffee is performed according to a known way, described for example in IT 1131532. In practice, each dispensing group 10 is physically and hydraulically connected to a small secondary boiler 14 provided to keep the water for dispensing coffee at a predetermined temperature value, considered suitable for making the beverage. Such predetermined temperature value is obtained through the controlled activation of at least one heating element 16, belonging to the secondary boiler 14 of each dispensing group 10 and appropriately controlled by an electronic control unit 18 of the espresso coffee machine. The electronic control unit 18 receives an input temperature signal, identified by a temperature probe 20 provided with a sensitive element enclosed within the secondary boiler 14 of each dispensing group 10 and placed in contact with the single-phase fluid consisting of the water.

A main water inlet circuit 22 for inletting water from the water supply network is hydraulically connected to the main boiler 12, and to the secondary boiler 14 of each dispensing group 10. Along the main water inlet circuit 22 at least one non-return valve 24 and at least one pressure reducing device 26 are arranged in sequence, normally calibrated at 1 bar, which stabilizes the base operating pressure value of the hydraulic circuit and compensates for any possible pressure variations in the water coming from the water supply network. Along the main water inlet circuit 22, downstream of the pressure reducing device 26, at least one pump 28, at least one flow meter 30 and at least one throttling nozzle 32 are also arranged in sequence.

The throttling nozzle 32 calibrates the maximum flow rate of water entering into a respective dispensing group 10 through a dispensing valve 34, that in turn determines the start and the end of dispensing, making the brewing water pass from the secondary boiler 14 of each dispensing group 10 to a brewing chamber 36 of said dispensing group 10. The brewing chamber 36 of each dispensing group 10 comprises, in a known way, a water diffusion shower head, a filter containing the coffee powder and the related filter holder. The dispensing valve 34 is typically a 3-way solenoid valve that, in the deactivation step, puts the brewing chamber 36 in communication with a duct at atmospheric pressure, so as to discharge the residual overpressure of the brewing chamber 36 that is generated at the end of the dispensing of the beverage.

The secondary boiler 14 of each dispensing group 10 is hydraulically connected to a mechanical overpressure safety valve 38, configured to activate in the case in which, due to the heating of the water with consequent increase in volume, there is a pressure increase that goes beyond a predetermined maximum pressure value, i.e. the maximum operating value of the hydraulic circuit intended for producing the espresso coffee. Typically this maximum pressure value must not exceed 13 bar.

According to the invention, the espresso coffee machine comprises an air inlet circuit 40, hydraulically connected to each dispensing group 10 and, more precisely, to the respective brewing chamber 36. The air inlet circuit 40 is provided with at least one compressor 42, electronically controlled by the electronic control unit 18 and configured for injecting air at a predetermined pressure value into the brewing chamber 36 of each dispensing group 10. The air inlet circuit 40 is further provided with at least one heating element 44, also electronically controlled by the electronic control unit 18 and configured for injecting air at a predetermined temperature value into the brewing chamber 36 of each dispensing group 10.

The compressor 42 is controlled by the electronic control unit 18 to work at variable speed and is positioned on the air inlet circuit 40 upstream of the heating element 44. In turn, the heating element 44 is preferably of a finned bare-wire type.

The air sucked by the compressor 42, pushed into the brewing chamber 36 of each dispensing group 10 through the heating element 44, is preferably filtered through at least one filter 46 placed on the air inlet circuit 40 upstream of the compressor 42. The air, at this point heated by the heating element 44, reaches the brewing chamber 36 passing through at least one non-return valve 48, placed on the air inlet circuit 40 downstream of the heating element 44. The function of the non-return valve 48 is to prevent the return of liquids from the brewing chamber 36 into the air inlet circuit 40.

The pre-brewing process with inflow of pressurized air, carried out by the espresso coffee machine described above, therefore involves the electronic control unit 18, the dispensing valve 34, the compressor 42 and the heating element 44. More specifically, when dispensing the beverage is required, and in particular in the first pre-brewing step which causes the coffee panel to be wetted, the dispensing valve 34 is activated.

At this point, the hot water present in the secondary boiler 14 of each dispensing group 10, pushed by the water supply at a pressure of 1 bar kept constant through the pressure reducer 26, passes through the throttle nozzle 32 and the dispensing valve 34 to reach the brewing chamber 36 of such a dispensing group 10. At the same time, both the compressor 42 and the heating element 44 are activated by the electronic control unit 18, in order to inject hot air into the brewing chamber 36 at the correct pressure and temperature for optimum preparation of the beverage.

The hot water mixture, enriched by hot air at low pressure, comes into contact with the coffee panel and completes the pre-brewing process for a desired period of time controlled by the electronic control unit 18. At the end of the pre-brewing interval, with a typical duration of 3-6 seconds, the high pressure brewing process begins, which occurs by activating the pump 28 and thus deactivating the compressor 42 and the relative heating element 44.

It is therefore possible to control in real time the air flow through the controlled modulation of the speed of the compressor 42, so as to obtain, in a same pre-brewing time interval, different water/air mixing ratios. This determines different types of emulsion of the beverage. This control also has the advantage of being able to vary the temperature of the hot pre-brewing air, due to the different heat exchange between the air flow and the heating element 44 due to the variation of flow rate that can be modulated through the compressor 42. This is a further element of flexibility of the type of emulsion obtainable from this process.

Based on a first operating mode of the espresso coffee machine, the air flow variation can take place through a manual control by an operator. By using a control device (not shown), functionally connected to the electronic control unit 18, the operator can increase or reduce the air flow quantity by acting on the speed of the compressor 42.

A second operating mode of the espresso coffee machine envisages storing, inside the electronic control unit 18, a set of predetermined flow rate values of the pre-brewing air flow that the espresso coffee machine is capable of reproducing autonomously with the simple activation of the beverage dispensing command. The different air flow values correspond to different levels of emulsion.

A third operating mode of the espresso coffee machine finally envisages a self-learning step, by the electronic control unit 18, of one or more flow rate values set manually by the operator, which are stored automatically within the set of predetermined flow rate values so that each predetermined flow rate value can then be reproduced automatically and repetitively by the espresso coffee machine.

Thus, it has been seen that the espresso coffee machine according to the present invention achieves the aim and objects set forth above.

The espresso coffee machine according to the present invention thus conceived is susceptible to many modifications and variants, all falling within the same inventive concept; furthermore, all the details can be replaced by technically equivalent elements. In practice, the materials used as well as shapes and dimensions, may be any, according to technical requirements.

The protective scope of the invention is therefore defined by the appended claims.

## Claims

1. Espresso coffee machine comprising:
- a main boiler (12), configured for producing hot water and steam;
- at least one dispensing group (10), configured for preparing coffee and physically and functionally independent from said main boiler (12);
- a secondary boiler (14) physically and hydraulically connected to each dispensing group (10), said secondary boiler (14) being configured to keep the water for dispensing coffee at a predetermined temperature value checked by a temperature probe (20) ;
- a main water inlet circuit (22) for inletting water from the water supply network, hydraulically connected to the main boiler (12) and to the secondary boiler (14) of each dispensing group (10), said main water inlet circuit (22) comprising at least one pump (28) that applies a predetermined pressure value to the water;
- an electronic control unit (18); and
- a dispensing valve (34), which determines the start and the end of the distribution, letting the water pass from the secondary boiler (14) of each dispensing group (10) to a brewing chamber (36) of said dispensing group (10), the espresso coffee machine being **characterized in that** it comprises:
- an air inlet circuit (40), hydraulically connected to the brewing chamber (36) of each dispensing group (10) ;
- at least one compressor (42), positioned on the air inlet circuit (40), electronically controlled by the electronic control unit (18) and configured for injecting air at a predetermined pressure value into the brewing chamber (36) of each dispensing group (10); and
- at least one heating element (44), positioned on the air inlet circuit (40), electronically controlled by the electronic control unit (18) and configured for injecting air at a predetermined temperature value into the brewing chamber (36) of each dispensing group (10).

2. Espresso coffee machine according to claim 1, **characterized in that** it comprises at least one filter (46), positioned on the air inlet circuit (40) upstream of the compressor (42), said filter (46) being configured for filtering the air sucked by the compressor (42) and forced into the brewing chamber (36) of each dispensing unit (10) through the heating element (44).

3. Espresso coffee machine according to claim 2, **characterized in that** it comprises at least one non-return valve (48), positioned on the air inlet circuit (40) downstream of the heating element (44), said non-return valve (48) preventing the backflow into the air inlet circuit (40) of liquids from the brewing chamber (36) .

4. Espresso coffee machine according to any claims 1 to 3, **characterized in that** the secondary boiler (14) of each dispensing group (10) is provided with at least one heating element (16) controlled by the electronic control unit (18) to keep the water for dispensing coffee at said predetermined temperature value.

5. Espresso coffee machine according to any claims 1 to 4, **characterized in that** said main water inlet circuit (22) comprises at least one non-return valve (24), arranged upstream of the pump (28).

6. Espresso coffee machine according to claim 5, **characterized in that** said main water inlet circuit (22) comprises at least one pressure reducing device (26), arranged downstream of the non-return valve (24) and upstream of the pump (28).

7. Espresso coffee machine according to any claims 1 to 6, **characterized in that** said main water inlet circuit (22) comprises at least one flow meter (30), arranged downstream of the pump (28).

8. Espresso coffee machine according to any claims 1 to 7, **characterized in that** said main water inlet circuit (22) comprises at least one throttling nozzle (32), arranged downstream of the pump (28), said throttling nozzle (32) calibrating the maximum flow rate of water entering into a respective dispensing group (10) through said dispensing valve (34).

9. Espresso coffee machine according to claim 8, **characterized in that** the dispensing valve (34) is a 3-way solenoid valve that, in the deactivation step, puts the brewing chamber (36) in communication with a duct at atmospheric pressure, so as to discharge the residual overpressure of the brewing chamber (36) that is generated at the end of the dispensing of the beverage.

10. Espresso coffee machine according to any claims 1 to 9, **characterized in that** the secondary boiler (14) of each dispensing group (10) is hydraulically connected to a mechanical overpressure safety valve (38), configured to activate in the case in which, due to the heating of the water with consequent increase in volume, there is a pressure increase that goes beyond a predetermined maximum pressure value.

11. Process for pre-brewing and extracting coffee in an espresso coffee machine according to any claims 1 to 10, the process comprising the steps of:
- activating the dispensing valve (34) for introducing hot water at a constant pressure into the brewing chamber (36) of at least one dispensing group (10);
- simultaneously activating both the compressor (42) and the heating element (44) for injecting hot air at preset pressure and temperature values into said brewing chamber (36);
- pre-brewing, by introducing the hot water and air mixture at preset pressure and temperature into the coffee layer for a desired time interval that is controlled by the electronic control unit (18);
- controlling in real time the air flow through the controlled modulation of the speed of the compressor (42), so as to obtain, in a same pre-brewing time interval, different water/air mixing ratios; and
- brewing at high pressure by activating the pump (28) and de-activating the compressor (42) and the related heating element (44).

12. Process according to claim 11, **characterized in that** the step for controlling in real time the air flow is carried out through a manual control by an operator.

13. Process according to claim 11, **characterized in that** it comprises a step of storing inside the electronic control unit (18) a set of predetermined flow rate values of the pre-brewing air flow that the espresso coffee machine is capable of reproducing autonomously when the beverage dispensing command is activated.

14. Process according to claim 11, **characterized in that** it comprises a self-learning step, by the electronic control unit (18), of one or more air flow rate values set manually by an operator, said one or more air flow rate values being stored automatically within a set of predetermined flow rate values so that each predetermined flow rate value can then be reproduced automatically and repetitively by the espresso coffee machine.

## Patentansprüche

1. Espressokaffeemaschine, umfassend:
- einen Hauptkessel (12), der ausgebildet ist, um heißes Wasser und Dampf zu erzeugen;
- mindestens eine Ausgabegruppe (10), die ausgebildet ist, um Kaffee physikalisch und funktional unabhängig von dem Hauptkessel (12) zuzubereiten;
- einen Nebenkessel (14), der physikalisch und hydraulisch mit jeder Ausgabegruppe (10) verbunden ist, wobei der Nebenkessel (14) ausgebildet ist, um das Wasser zum Ausgeben von Kaffee auf einem vorbestimmten Temperaturwert zu halten, der durch einen Temperaturfühler (20) geprüft wird;
- einen Wassereinlass-Hauptkreis (22) zum Einlassen von Wasser von dem Wasserversorgungsnetz, der hydraulisch mit dem Hauptkessel (12) und mit dem Nebenkessel (14) von jeder Ausgabegruppe (10) verbunden ist, wobei der Wassereinlass-Hauptkreis (22) mindestens eine Pumpe (28) umfasst, die einen vorbestimmten Druckwert auf das Wasser anwendet;
- eine elektronische Steuereinheit (18); und
- ein Ausgabeventil (34), das den Beginn und das Ende der Verteilung bestimmt, wobei das Wasser von dem Nebenkessel (14) von jeder Ausgabegruppe (10) zu einer Brühkammer (36) der Ausgabegruppe (10) durchgelassen wird, wobei die Espressokaffeemaschine **dadurch gekennzeichnet ist, dass** sie umfasst:
- einen Lufteinlasskreis (40), der hydraulisch mit der Brühkammer (36) von jeder Ausgabegruppe (10) verbunden ist;
- mindestens einen Verdichter (42), der an dem Lufteinlasskreis (40) positioniert ist, elektronisch durch die elektronische Steuereinheit (18) gesteuert wird und ausgebildet ist, um Luft mit einem vorbestimmten Druckwert in die Brühkammer (36) von jeder Ausgabegruppe (10) einzupressen; und
- mindestens ein Heizelement (44), das an dem Lufteinlasskreis (40) positioniert ist, elektronisch durch die Steuereinheit (18) gesteuert wird und ausgebildet ist, um Luft mit einem vorbestimmten Temperaturwert in die Brühkammer (36) von jeder Ausgabegruppe (10) einzupressen.

2. Espressokaffeemaschine nach Anspruch 1, **dadurch gekennzeichnet, dass** sie mindestens ein Filter (46) umfasst, das an dem Lufteinlasskreis (40) stromaufwärts des Verdichters (42) positioniert ist, wobei das Filter (46) ausgebildet ist, um die Luft zu filtern, die von dem Kompressor (42) angesaugt und in die Brühkammer (36) von jeder Ausgabeeinheit (10) durch das Heizelement (44) gezwungen wird.

3. Espressokaffeemaschine nach Anspruch 2, **dadurch gekennzeichnet, dass** sie mindestens ein Rückschlagventil (48) umfasst, das in dem Lufteinlasskreis (40) stromabwärts des Heizelements (44) positioniert ist, wobei das Rückschlagventil (48) das Rückströmen von Flüssigkeiten von der Brühkammer (36) in den Lufteinlasskreis (40) verhindert.

4. Espressokaffeemaschine nach einem der Ansprüche 1 bis 3, **dadurch gekennzeichnet, dass** der Nebenkessel (14) von jeder Ausgabegruppe (10) mit mindestens einem Heizelement (16) versehen ist, das von der elektronischen Steuereinheit (18) gesteuert wird, um das Wasser zum Ausgeben von Kaffee bei dem vorbestimmten Temperaturwert zu halten.

5. Espressokaffeemaschine nach einem der Ansprüche 1 bis 4, **dadurch gekennzeichnet, dass** der Wassereinlass-Hauptkreis (22) mindestens ein Rückschlagventil (24) umfasst, das stromaufwärts der Pumpe (28) angeordnet ist.

6. Espressokaffeemaschine nach Anspruch 5, **dadurch gekennzeichnet, dass** der Wassereinlass-Hauptkreis (22) mindestens eine Druckminderungsvorrichtung (26) umfasst, die stromabwärts des Rückschlagventils (24) und stromaufwärts der Pumpe (28) angeordnet ist.

7. Espressokaffeemaschine nach einem der Ansprüche 1 bis 6, **dadurch gekennzeichnet, dass** der Wassereinlass-Hauptkreis (22) mindestens einen Strömungsmesser (30) umfasst, der stromabwärts der Pumpe (28) angeordnet ist.

8. Espressokaffeemaschine nach einem der Ansprüche 1 bis 7, **dadurch gekennzeichnet, dass** der Wassereinlass-Hauptkreis (22) mindestens eine Drosseldüse (32) umfasst, die stromabwärts der Pumpe (28) angeordnet ist, wobei die Drosseldüse (32) die maximale Strömungsgeschwindigkeit von Wasser kalibriert, das durch das Ausgabeventil (34) in eine entsprechende Ausgabegruppe (10) eintritt.

9. Espressokaffeemaschine nach Anspruch 8, **dadurch gekennzeichnet, dass** das Ausgabeventil (34) ein 3-Wege-Magnetventil ist, das in dem Deaktivierungsschritt die Brühkammer (36) mit einer Leitung bei Atmosphärendruck in Verbindung setzt, um den restlichen Überdruck der Brühkammer (36), der am Ende der Ausgabe des Getränks erzeugt wird, abzulassen.

10. Espressokaffeemaschine nach einem der Ansprüche 1 bis 9, **dadurch gekennzeichnet, dass** der Nebenkessel (14) von jeder Abgabegruppe (10) hydraulisch mit einem mechanischen Überdrucksicherheitsventil (38) verbunden ist, das ausgebildet ist, um in dem Fall aktiviert zu werden, in dem aufgrund des Erhitzens des Wassers mit einer daraus folgenden Erhöhung des Volumens eine Druckerhöhung vorhanden ist, die über einen vorbestimmten Höchstdruckwert hinaus geht.

11. Verfahren zum Vorbrühen und Extrahieren von Kaffee in einer Espressokaffeemaschine nach einem der Ansprüche 1 bis 10, wobei das Verfahren die folgenden Schritte umfasst:
- Aktivieren des Ausgabeventils (34) zum Einleiten von heißem Wasser mit einem konstanten Druck in die Brühkammer (36) von mindestens einer Ausgabegruppe (10);
- gleichzeitig Aktivieren sowohl des Verdichters (42) als auch des Heizelements (44) zum Einpressen von heißer Luft bei voreingestellten Druck- und Temperaturwerten in die Brühkammer (36);
- Vorbrühen, durch Einleiten der Mischung aus heißem Wasser und Luft mit einem voreingestellten Druck und einer voreingestellten Temperatur in die Kaffeeschicht während eines gewünschten Zeitintervalls, das von der elektronischen Steuereinheit (18) gesteuert wird;
- in Echtzeit, Steuern der Luftströmung durch die gesteuerte Modulation der Geschwindigkeit des Verdichters (42), um in einem selben Vorbrüh-Zeitintervall verschiedene Wasser/Luft-Mischungsverhältnisse zu erhalten; und
- Brühen bei hohem Druck durch Aktivieren der Pumpe (28) und Deaktivieren des Verdichters (42) und des entsprechenden Heizelements (44).

12. Verfahren nach Anspruch 11, **dadurch gekennzeichnet, dass** der Schritt zum Steuern der Luftströmung in Echtzeit durch eine manuelle Steuerung von einem Bediener durchgeführt wird.

13. Verfahren nach Anspruch 11, **dadurch gekennzeichnet, dass** es einen Schritt zum Speichern einer Menge von vorbestimmten Strömungsgeschwindigkeitswerten der Vorbrüh-Luftströmung, die die Espressokaffeemaschine in der Lage ist, autonom zu reproduzieren, wenn der Getränkeausgabebefehl aktiviert wird, in der elektronischen Steuereinheit (18) umfasst.

14. Verfahren nach Anspruch 11, **dadurch gekennzeichnet, dass** es einen Schritt zum Selbstlernen von einem oder mehreren manuell von einem Bediener eingestellten Luftströmungsgeschwindigkeitswerten durch die elektronische Steuereinheit (18) umfasst, wobei die einen oder mehreren Luftströmungsgeschwindigkeitswerte automatisch innerhalb einer Menge von vorbestimmten Strömungsgeschwindigkeitswerten gespeichert sind, derart dass jeder vorbestimmte Strömungsgeschwindigkeitswert dann automatisch und wiederholt von der Espressokaffeemaschine reproduziert werden kann.

## Revendications

1. Machine à café espresso comprenant :
- une bouilloire principale (12), configurée pour produire de l'eau chaude et de la vapeur ;
- au moins un groupe de distribution (10), configuré pour préparer du café et physiquement et fonctionnellement indépendant de ladite bouilloire principale (12) ;
- une bouilloire secondaire (14) reliée de manière physique et hydraulique à chaque groupe de distribution (10), ladite bouilloire secondaire (14) étant configurée pour maintenir l'eau pour la distribution de café à une valeur de température prédéterminée vérifiée par une sonde de température (20) ;
- un circuit d'entrée d'eau principal (22) pour faire entrer de l'eau à partir du réseau d'alimentation en eau, relié de manière hydraulique à la bouilloire principale (12) et à la bouilloire secondaire (14) de chaque groupe de distribution (10), ledit circuit d'entrée d'eau principal (22) comprenant au moins une pompe (28) qui applique une valeur de pression prédéterminée à l'eau ;
- une unité de commande électronique (18) ; et
- une vanne de distribution (34), qui détermine le début et la fin de la distribution, laissant l'eau passer de la bouilloire secondaire (14) de chaque groupe de distribution (10) à une chambre d'infusion (36) dudit groupe de distribution (10), la machine à café espresso étant **caractérisée en ce qu'**elle comprend :
- un circuit d'entrée d'air (40), relié de manière hydraulique à la chambre d'infusion (36) de chaque groupe de distribution (10) ;
- au moins un compresseur (42), positionné sur le circuit d'entrée d'air (40), commandé de manière électronique par l'unité de commande électronique (18) et configuré pour injecter de l'air à une valeur de pression prédéterminée dans la chambre d'infusion (36) de chaque groupe de distribution (10) ; et
- au moins un élément chauffant (44), positionné sur le circuit d'entrée d'air (40), commandé de manière électronique par l'unité de commande électronique (18) et configuré pour injecter de l'air à une valeur de température prédéterminée dans la chambre d'infusion (36) de chaque groupe de distribution (10).

2. Machine à café espresso selon la revendication 1, **caractérisée en ce qu'**elle comprend au moins un filtre (46), positionné sur le circuit d'entrée d'air (40) en amont du compresseur (42), ledit filtre (46) étant configuré pour filtrer l'air aspiré par le compresseur (42) et forcé dans la chambre d'infusion (36) de chaque unité de distribution (10) à travers l'élément chauffant (44).

3. Machine à café espresso selon la revendication 2, **caractérisée en ce qu'**elle comprend au moins un clapet anti-retour (48), positionné sur le circuit d'entrée d'air (40) en aval de l'élément chauffant (44), ledit clapet anti-retour (48) empêchant le refoulement dans le circuit d'entrée d'air (40) de liquides provenant de la chambre d'infusion (36).

4. Machine à café espresso selon l'une quelconque des revendications 1 à 3, **caractérisée en ce que** la bouilloire secondaire (14) de chaque groupe de distribution (10) est munie d'au moins un élément chauffant (16) commandé par l'unité de commande électronique (18) pour maintenir l'eau pour la distribution de café à ladite valeur de température prédéterminée.

5. Machine à café espresso selon l'une quelconque des revendications 1 à 4, **caractérisée en ce que** ledit circuit d'entrée d'eau principal (22) comprend au moins un clapet anti-retour (24), agencé en amont de la pompe (28).

6. Machine à café espresso selon la revendication 5, **caractérisée en ce que** ledit circuit d'entrée d'eau principal (22) comprend au moins un dispositif de réduction de pression (26), agencé en aval du clapet anti-retour (24) et en amont de la pompe (28).

7. Machine à café espresso selon l'une quelconque des revendications 1 à 6, **caractérisée en ce que** ledit circuit d'entrée d'eau principal (22) comprend au moins un débitmètre (30), agencé en aval de la pompe (28).

8. Machine à café espresso selon l'une quelconque des revendications 1 à 7, **caractérisée en ce que** ledit circuit d'entrée d'eau principal (22) comprend au moins une buse à étranglement (32), agencée en aval de la pompe (28), ladite buse à étranglement (32) calibrant le débit d'eau maximal entrant dans un groupe de distribution respectif (10) à travers ladite vanne de distribution (34).

9. Machine à café espresso selon la revendication 8, **caractérisée en ce que** la vanne de distribution (34) est une électrovanne à 3 voies qui, à l'étape de désactivation, place la chambre d'infusion (36) en communication avec un conduit à pression atmosphérique, afin d'évacuer la surpression résiduelle de la chambre d'infusion (36) qui est générée à la fin de la distribution de la boisson.

10. Machine à café espresso selon l'une quelconque des revendications 1 à 9, **caractérisée en ce que** la bouilloire secondaire (14) de chaque groupe de distribution (10) est reliée de manière hydraulique à une vanne de sureté de surpression mécanique (38), configurée pour s'activer dans le cas dans lequel, en raison du chauffage de l'eau avec une augmentation de volume résultante, se produit une augmentation de pression qui va au-delà d'une valeur de pression maximale prédéterminée.

11. Procédé de pré-infusion et d'extraction de café dans une machine à café espresso selon l'une quelconque des revendications 1 à 10, le procédé comprenant les étapes consistant à :
- activer la vanne de distribution (34) pour introduire de l'eau chaude à une pression constante dans la chambre d'infusion (36) d'au moins un groupe de distribution (10) ;
- activer simultanément à la fois le compresseur (42) et l'élément chauffant (44) pour injecter de l'air chaud à des valeurs de pression et de température prédéfinies dans ladite chambre d'infusion (36) ;
- pré-infuser, en introduisant le mélange d'eau chaude et d'air à pression et température prédéfinies dans la couche de café pendant un intervalle de temps souhaité qui est commandé par l'unité de commande électronique (18) ;
- commander en temps réel le débit d'air par l'intermédiaire de la modulation commandée de la vitesse du compresseur (42), afin d'obtenir, dans un même intervalle de temps de pré-infusion, différents rapports de mélange eau/air ; et
- infuser à haute pression en activant la pompe (28) et en désactivant le compresseur (42) et l'élément chauffant associé (44).

12. Procédé selon la revendication 11, **caractérisé en ce que** l'étape de commande en temps réel du débit d'air est effectuée par l'intermédiaire d'une commande manuelle par un opérateur.

13. Procédé selon la revendication 11, **caractérisé en ce qu'**il comprend une étape de stockage, à l'intérieur de l'unité de commande électronique (18), d'un ensemble de valeurs de débit prédéterminées du débit d'air de pré-infusion que la machine à café espresso est apte à reproduire de manière autonome lorsque la fonction de distribution de boisson est activée.

14. Procédé selon la revendication 11, **caractérisé en ce qu'**il comprend une étape d'auto-apprentissage, par l'unité de commande électronique (18), d'une ou de plusieurs valeurs de débit d'air définies manuellement par un opérateur, lesdites une ou plusieurs valeurs de débit d'air étant stockées de manière automatique à l'intérieur d'un ensemble de valeurs de débit prédéterminées de sorte que chaque valeur de débit prédéterminée peut ensuite être reproduite de manière automatique et répétitive par la machine à café espresso.
